# EUROPEAN PATENT SPECIFICATION

(11) **EP 4 064 847 B1**
(45) Date of publication and mention of the grant of the patent: **03.01.2024**
(21) Application number: 20811414.0
(22) Date of filing: 27.11.2020
(51) Int. Cl.: A23B 4/06, A23B 4/07, A23L 3/3427, A23L 3/36, A23L 3/365, A23L 13/00, A21D 13/22, A21D 13/31, A21D 13/60, A21D 15/02

(54) **PACKAGED FROZEN BREADED FOOD PRODUCT**
VERPACKTES GEFRORENES PANIERTES LEBENSMITTELPRODUKT
PRODUIT ALIMENTAIRE PANÉ SURGELÉ EMBALLÉ

(30) Priority: 28.11.2019 EP 19212044; 24.06.2020 EP 20182039
(43) Date of publication of application: 05.10.2022
(73) Proprietor: Crisp Sensation Technology B.V., 5301 LW Zaltbommel (NL)
(72) Inventor: VAN DONKELAAR, Laura Henrietta Gerardina, 1231 PB Oud-Loosdrecht (NL); KALSBEEK, Jasper Steven, 1231 PB Oud-Loosdrecht (NL); LOUVET-VAN EIJK, Mariëlle, 1231 PB Oud-Loosdrecht (NL)
(74) Representative: Nederlandsch Octrooibureau
(86) International application number: PCT/EP2020/083725
(87) International publication number: WO 2021/105423

(56) References cited:
- EP-A1- 0 374 301
- EP-A1- 1 036 507
- EP-A1- 3 141 132
- EP-A2- 2 586 726
- EP-B1- 0 374 301
- EP-B1- 1 036 507
- WO-A1-97/03572
- JP-A- H0 564 574
- JP-A- H06 141 788
- JP-A- H08 228 696
- US-A1- 2012 082 770
- US-A1- 2015 203 272

## Description

### TECHNICAL FIELD OF THE INVENTION

The present invention relates to a packaged frozen food product that can be reheated for consumption in a microwave (microwaveable) or an oven (ovenable). More particularly, the invention relates to such a packaged frozen food product comprising a sealed package made of material that is impermeable to water vapour, said sealed package holding:
- 40-1,000 grams of one or more frozen breaded food products comprising 30-90 wt.% of a filling having a water content of at least 30 wt.% and an outer crumb coating, said one or more frozen breaded food products having a total water content of 25-75 wt.%; and
- silica gel desiccant in an amount of 1-20% by weight of the one or more frozen breaded food products;
wherein the packaged frozen fried food product is obtained by a process comprising:
a. providing a water-containing filling composition;
b. providing a plastically deformable farinaceous dough;
c. enveloping a portion of the filling composition with a layer of the farinaceous dough to produce an enveloped filling;
d. pre-coating the surface of the enveloped filling with an adhesion composition to produce a pre-coated product; and
e. applying a crumb onto the surface of the pre-coated product to produce a breaded product;
f. frying the breaded food product to produce a fried breaded food product;
g. introducing the fried breaded food product into a freezer to produce a frozen breaded food product;
h. introducing one or more of the frozen breaded food products and silica gel desiccant into a package; and
i. sealing the package;
wherein the atmosphere within the sealed package is in direct contact with the one or more frozen breaded food products and the silica gel desiccant.

The invention further relates to a process of producing a packaged frozen food product and to a method of preparing a ready-to-eat food product by removing a frozen food product from the package and heating it in a microwave or an oven.

### BACKGROUND OF THE INVENTION

Fried battered and breaded (crumb-coated) food products with a filling of fish, seafood, poultry, red meat, vegetables, ragout, cheese etc. are popular for their crisp texture and golden brown appearance. Such coated food products generally comprise a food substrate to which a variety of combinations of coating materials is applied. The coating materials include tempura or cohesion batters, adhesion batters, predust, and breading crumbs

The crisp texture of fried batter and breaded food products rapidly disappears after the fried product has been prepared, especially If the substrate (filling) has a high water content. This loss of crispiness is caused by the uptake of water by the crunchy crumb layer. After frying, water migrates from the filling towards the crumb layer and is absorbed by the dry hard crumb particles. Water uptake by these crumb particles transforms these hard rigid particles into elastic, deformable particles. The effect of this transition is very noticeable to consumers.

To provide frozen breaded food products comprising a water-containing filling that can be reheated in a microwave or an oven to produce a ready-to-eat product having a crispy outer coating, especially after the product has been stored in a freezer for up to a half year, represents a formidable challenge, as freezing temperatures do not prevent water migration. As a matter of fact, significant water uptake by the crumb layer occurs during frozen storage of frozen breaded food products and this water uptake adversely affects the eating quality, notably the crispiness, of the breaded food product after it has been prepared in a microwave or oven. This is because, unlike frying, microwave heating and oven heating are unable to remove sufficient water from the moist crumb to (re)create a crunchy crumb layer.

EP-A 0 374 301 describes a packaged food composition which comprises a package containing a foodstuff and a desiccant. Excess water is absorbed by the desiccant rather than parts of the foodstuff which should retain a low water content when the foodstuff is subsequently reheated for consumption.

JP H05 64574 relates to a frozen food that is obtained by hermetically sealing an oil-fried or baked food requiring crispy texture and a drying agent in a steam- impermeable film and freezing the food. The examples describe how fried breaded pork chops were frozen in a bag together with calcium chloride and silica gel.

EP-A 1 036 507 relates to a microwaveable frozen food, which comprises a food substrate and a coating and/or a sheet, characterized in that a layer composed of a coating layer agent capable of maintaining a low vapour permeability after cooking by heating and during freeze-preservation of the food is interposed between the food substrate and the coating and/or the sheet. The examples describe how frozen croquettes were packaged together with silica gel.

US 2015/0203272 describes an absorbent food pad for use in a food package or food display case having food therein comprising: a top layer; a bottom layer; an absorbent body positioned between the top layer and the bottom layer; and a desiccant positioned in or on the absorbent body, wherein the desiccant absorbs or adsorbs ambient moisture in the food package or food display case to prolong the shelf life and enhance the appearance of the food.

WO 2017/118746 describes a method of manufacture of a microwave or thermally reheatable or cookable food product comprising the steps of:
- providing a solid or solidified substrate;
- applying a first aqueous coating to the substrate;
- applying an inner coating layer comprising ethylcellulose, a particulate farinaceous component and, optionally, one or more further edible ingredients to form an ethylcellulose coated core;
- applying a second aqueous coating to the ethylcellulose coated core;
- applying a coating of crumb to form a breaded product;
- frying the breaded product; and
- freezing the fried product.

The coating layer comprising ethylcellulose prevents migration of water from the substrate to the crumb coating.

### SUMMARY OF THE INVENTION

The inventors have discovered that the shelf-life of frozen breaded food products that are meant to be reheated in a microwave or an oven can be extended substantially by preparing such frozen breaded food products using a method comprising enveloping the filling with a dough layer, applying an adhesion coating and a crumb, followed by frying and freezing, and by packaging the frozen food products so obtained in a sealed package that is impermeable to water, together with a small quantify of silica gel desiccant.

Thus, a first aspect of the present invention relates to a packaged frozen food product comprising a sealed package made of material that is impermeable to water vapour, said sealed package holding:
- 40-1,000 grams of one or more frozen breaded food products comprising 30-90 wt.% of a filling having a water content of at least 30 wt.% and an outer crumb coating, said one or more frozen breaded food products having a total water content of 25-75 wt.%; and
- silica gel desiccant in an amount of 1-20% by weight of the one or more frozen breaded food products;
wherein the packaged frozen food product is obtained by a process comprising:
a. providing a water-containing filling composition;
b. providing a plastically deformable farinaceous dough;
c. enveloping a portion of the filling composition with a layer of the farinaceous dough to produce an enveloped filling;
d. pre-coating the surface of the enveloped filling with an adhesion composition to produce a pre-coated product; and
e. applying a crumb onto the surface of the pre-coated product to produce a breaded product, said breaded food product having a total water content of 25-75 wt.%;
f. frying the breaded food product to produce a fried breaded food;
g. introducing the fried breaded food product into a freezer to produce a frozen breaded food product;
h. introducing one or more of the frozen breaded food products and silica gel desiccant into a package or introducing one or more of the frozen breaded food products into a package that already contains silica gel desiccant, said package being made of material that is impermeable to water vapour; and
i. sealing the package; and

wherein the atmosphere within the sealed package is in direct contact with the one or more frozen breaded food products and the silica gel desiccant; and
wherein the walls of the sealed package have a water vapour transmission rate of not more than 10 g/m².day at 23°C and 85% R.H., according to DIN 53122.

Although the inventors do not wish to be bound by theory it is believed that the presence of a dough layer around the filling and the presence of silica gel in the package contribute synergistically to the improved shelf-life of the frozen food product of the present invention.

A second aspect of the invention relates to process of producing a packaged frozen food product, said process comprising:
- providing a water-containing filling composition;
- providing a plastically deformable farinaceous dough;
- enveloping a portion of the filling composition with a layer of the farinaceous dough to produce an enveloped filling;
- pre-coating the surface of the enveloped filling with an adhesion composition to produce a pre-coated product;
- applying a crumb onto the surface of the pre-coated product to produce a breaded product having a total water content of 25-75 wt.%;
- frying the breaded food product to produce a fried breaded food product;
- introducing the fried breaded food product into a freezer to produce a frozen breaded food product;
- introducing one or more of the frozen breaded food products and silica gel desiccant into a package or introducing one or more of the frozen breaded food products into a package that already contains silica gel desiccant, said package being made of material that is impermeable to water vapour; and
- sealing the package;
wherein the silica gel desiccant is applied in an amount of 1-20% by weight of the one or more frozen breaded food products.

A third aspect of the invention relates to a method of preparing a ready-to-eat breaded food product, said method comprising:
- opening the sealed package of the packaged frozen product of the present invention;
- removing the one or more of the breaded food products from the package; and
- heating at least one of said breaded food products in a microwave or an oven to a core temperature of at least 40°C.

### DETAILED DESCRIPTION OF THE INVENTION

Accordingly, the invention provides a packaged frozen food product comprising a sealed package made of material that is impermeable to water vapour, said sealed package holding:
- 40-1,000 grams of one or more frozen breaded food products comprising 30-90 wt.% of a filling having a water content of at least 30 wt.% and an outer crumb coating, said one or more frozen breaded food products having a total water content of 25-75 wt.%; and
- silica gel desiccant in an amount of 1-20% by weight of the one or more frozen breaded food products;

desiccant;
wherein the packaged frozen food product is obtained by a process comprising:
   a. providing a water-containing filling composition;
   b. providing a plastically deformable farinaceous dough;
   c. enveloping a portion of the filling composition with a layer of the farinaceous dough to produce an enveloped filling;
   d. pre-coating the surface of the enveloped filling with an adhesion composition to produce a pre-coated product; and
   e. applying a crumb onto the surface of the pre-coated product to produce a breaded product, said breaded food product having a total water content of 25-75 wt.%;
   f. frying the breaded food product to produce a fried breaded food product;
   g. introducing the fried breaded food product into a freezer to produce a frozen breaded food product;
   h. introducing one or more of the frozen breaded food products and silica gel desiccant into a package or introducing one or more of the frozen breaded food products into a package that already contains silica gel desiccant, said package being made of material that is impermeable to water vapour; and
   i. sealing the package; and
wherein the atmosphere within the sealed package is in direct contact with the one or more frozen breaded food products and the silica gel desiccant; and
wherein the walls of the sealed package have a water vapour transmission rate of not more than 10 g/m².day at 23°C and 85% R.H., according to DIN 53122.

The terminology "package made of material that is impermeable to water vapour" as used herein refers to a package whose walls have a water vapour transmission rate (WVTR) of not more than 10 g/m².day at 23°C and 85% R.H., according to DIN 53122.

The term "silica gel desiccant" as used herein refers to an amorphous and porous form of silicon dioxide (silica), consisting of an irregular three-dimensional framework of alternating silicon and oxygen atoms with nanometer-scale voids and pores that can adsorb and hold moisture. Silica gel typically can adsorb up to 40% of its weight in moisture and does not swell in size as it adsorbs moisture.

The terminology "in direct contact" as used herein means that water vapour molecules contained in the gas phase that is present within the sealed package can freely travel from the one or more frozen breaded food products to the silica gel desiccant. Thus, the atmosphere is also in direct contact with the one or more frozen breaded food products and the silica gel desiccant when the desiccant and/or the one or more frozen breaded food products are packaged in a porous material that is permeable to water vapour.

The term "farinaceous dough" as used herein refers to a mixture that largely consists of flour and water, and that is stiff enough to knead or roll. In this respect a farinaceous dough is different from a batter, which is a pourable mixture that also largely consists of flour and water, but generally has a higher water content than dough.

The term "dough" as used herein also encompasses laminated doughs containing one or more fat layers.

The term "fat" as used herein refers to lipids selected from triglycerides, diglycerides, monoglycerides, free fatty acids and phospholipids.

The words 'comprising' and 'containing' as used herein should not be interpreted restrictively as meaning 'consisting of'. In other words, besides the features listed after these words, non-listed features may be present.

The sealed package is preferably made of a material selected from polyethylene, polyamide, polyvinyl chloride, polystyrene, polypropylene and combinations thereof. Most preferably, the sealed package is made of a combination of polyamide and polyethylene.

According to a particularly preferred embodiment, the sealed package employed in accordance with the present invention is a sealed bag. Preferably, the bag is made of a laminate that comprises one or more polyethylene layers and at least one layer of another polymer or metal. Most preferably, the bag is made of a laminate that comprises a polyethylene layer and a polyamide layer.

The walls of the sealed package preferably have a water vapour transmission rate (WVTR) of not more than 5 g/m².day, more preferably of not more than 3 g/m².day according to at 23°C and 85% R.H., according to DIN 53122.

In accordance with an advantageous embodiment of the present invention, the packaged frozen food product is a vacuum packaged frozen food product. Here the term "vacuum packaged" means that at least a part of the air has been removed from the package after the frozen food product was introduced and before sealing of the package.

In accordance with another advantageous embodiment of the invention, the sealed package comprises a modified atmosphere containing at least 90 vol.% of an inert gas selected from nitrogen, carbon dioxide, argon and mixtures thereof. More preferably, the modified atmosphere contains at least 90 vol.%, most preferably at least 95 vol.% of nitrogen.

According to another preferred embodiment, the atmosphere within the sealed package constitutes 10-70 vol.%, more preferably 20-60 vol.% and most preferably 30-50 vol.% of the total volume within the sealed package.

The sealed package of the present invention preferably holds 60-600 grams, more preferably 100-400 grams of one or more frozen breaded food products.

Examples of breaded food products that may suitably be packaged in accordance with the present invention include chicken nuggets, cheese bites, fish fingers, croquettes and "bitterballen".

The benefits of the present invention are particularly appreciated when the frozen breaded food product contains a filling with a total water content of at least 40 wt.%, more preferably of at least 50 wt.% and most preferably of at least 60 wt.%.

Typically, the filling constitutes 35-88 wt.% and most preferably 40-85 wt.% of the one or more frozen breaded food products.

According to a particularly preferred embodiment, the frozen breaded food product comprises a layer of farinaceous dough that fully surrounds the filling and that is present between the filling and the crumb layer.

The aforementioned layer of farinaceous dough preferably has an average thickness of 0.5-2 mm, more preferably of 0.6-1.8 mm, even more preferably 0.75-1.5 mm and most preferably of 0.8-1.2 mm.

The silica gel desiccant preferably is contained in the sealed package in an amount of 2-18% by weight of the one or more frozen breaded food products, more preferably in an amount of 3-16% by weight of the one or more frozen breaded food products, even more preferably in an amount of 3.5-14% by weight of the one or more frozen breaded food products and most preferably in an amount of 4-12% by weight of the one or more frozen breaded food products.

Calculated by weight of the total amount of water that is present in the one or more frozen breaded food products, the silica gel desiccant is preferably present in the sealed package in an amount of 2-40% by weight of water, more preferably in an amount of 4-30% by weight of water, even more preferably in an amount of 5-25% by weight of water and most preferably in an amount of 6-22% by weight of water.

The silica gel desiccant preferably has an adsorption capacity for water vapour at 25°C and a relative humidity of 90% of 25-45 wt.%, more preferably of 27-40 wt.%.

The silicon dioxide (SiOs) content of the silica gel desiccant preferably is at least 96 wt.%, more preferably at least 97 wt.%.

The specific surface area (BET) of the silica gel desiccant preferably lies in the range of 250 to 1000 m²/g, more preferably in the range of 300 to 900 m²/g, and most preferably in the range of 350 to 800 m²/g based on ISO 9277.

The silica gel desiccant employed in accordance with the present invention preferably is a granulate. Preferably, at least 80 wt.% of the granules of said granulate have a diameter in the range of 0.5 and 5.0 mm, more preferably in the range of 2 to 4 mm.

In order to prevent direct contact between the silica gel desiccant and the frozen breaded food products, the silica gel desiccant is preferably separated from the one or more frozen breaded food products by a sheet of material that is impermeable to the silica gel desiccant and permeable to water vapour. The sheet of material separating the silica gel desiccant from the one or more breaded food products is preferably made of (laminated) paper and/or polyethylene fibers (e.g Tyvek^{®}).

According to a particularly preferred embodiment, the silica gel desiccant is comprised in a compartment that is secured to the inside of the sealed package.

The packaged frozen food product is preferably obtained by the process as described below.

Another aspect of the present invention relates to a process of producing a packaged frozen food product, said process comprising:
- providing a water-containing filling composition;
- providing a plastically deformable farinaceous dough;
- enveloping a portion of the filling composition with a layer of the farinaceous dough to produce an enveloped filling;
- pre-coating the surface of the enveloped filling with an adhesion composition to produce a pre-coated product;
- applying a crumb onto the surface of the pre-coated product to produce a breaded product having a total water content of 25-75 wt.%;
- frying the breaded food product to produce a fried breaded food product;
- introducing the fried breaded food product into a freezer to produce a frozen breaded food product;
- introducing one or more of the frozen breaded food products and silica gel desiccant into a package or introducing one or more of the frozen breaded food products into a package that already contains silica gel desiccant, said package being made of material that is impermeable to water vapour; and
- sealing the package;
wherein the silica gel desiccant is applied in an amount of 1-20% by weight of the one or more frozen breaded food products.

Preferably, the aforementioned production process yields a packaged food frozen product as described herein before.

The layer of farinaceous dough that is used to envelop the portion of the filling preferable has an average thickness of 0.5-2 mm, more preferably of 0.6-1.8 mm, even more preferably 0.75-1.5 mm and most preferably of 0.8-1.2 mm.

The water content of the dough preferably is in the range of 15 to 40 wt.%, more preferably in the range of 18 to 35 wt.% and most preferably of 22 to 32 wt.%.

The dough preferably contains 30 to 65 wt.% flour, more preferably 35 to 60 wt.% flour and most preferably 40 to 52 wt.% flour. Examples of flours that can be used in the preparation of the dough include wheat flour, rye flour, rice flour, barley flour, maize flour, oat flour and combinations thereof. Preferably, at least 65 wt.%, more preferably at least 75 wt.% and most preferably at least 85 wt.% of the flour is wheat flour.

The fat content of the dough may affect the crispiness of the microwave heated food product after long term storage. Preferably, the dough comprises 10 to 35 wt.% fat, more preferably 15 to 30 wt.% fat and most preferably 20 to 28 wt.% fat. The fat content of the dough includes the fat that is contained in any thin fat layers of laminated dough.

Particularly good results can be achieved in terms of freezer stability if the fat contained in the dough has a melting point of at least 40°C, more preferably of 42 to 70°C and most preferably of 45 to 55°C. Examples of fats that can be employed in the preparation of the dough include high melting fats selected from hydrogenated vegetable oils, palm stearin and mixtures thereof, and blends of these high melting fats with vegetable oils such as sunflower oil, soybean oil, rapeseed oil, cottonseed oil, safflower oil, olive oil and mixtures thereof. The melting point of fats is determined by means of ISO method 6321:2002.

Triglycerides and diglycerides preferably constitute at least about 90 wt.% of the fat that is contained in the dough. Triglycerides preferably constitute at least about 80 wt.%, more preferably at least about 85 wt.% of the fat.

The combination of water, flour and fat preferably constitutes at least 60 wt.%, more preferably at least 70 wt.% and most preferably at least 80 wt.% of the dough.

The dough employed in the present process can be a laminated or a non-laminated dough. Preferably, the dough is a non-laminated dough.

The flour component of the dough preferably contains a considerable amount of gluten. During preparation of the dough, gluten swells to form a continuous network of fine strands. This network of hydrophobic protein is believed to impair migration of water. Preferably, the dough contains at least about 8% gluten by weight of flour (including gluten). More preferably, the dough contains about 9 to about 14%, most preferably about 11 to about 14% gluten by weight of flour.

Before frying, the breaded food product preferably has a total water content of at least 30 wt.%, more preferably of at least 40 wt.%, even more preferably of at least 50 wt.% and most preferably of at least 60 wt.%.

The filling preferably constitutes 30-92 wt.%, more preferably 35-90 wt.%, most preferably 40-87 wt.% of the breaded food product before it is fried.

The frying of the breaded food product in the present process preferably is done using oil having a temperature of 150-280°C, more preferably of 160-220°C and most preferably of 170-210°C.

Preferably, the frying of the breaded food product is achieved by contacting the breaded product with the hot oil for 0.5-4 minutes, more preferably 1-3 minutes and most preferably 1.5-2.5 minutes.

Preferably, the breaded food product reaches a core temperature of at least 65°C, more preferably of at least 68°C, even more preferably of at least 70°C and most preferably of 72 to 95°C at the end of the frying step.

According to a particularly preferred embodiment, the fried breaded food product still has a core temperature of no less than 50°C when it is introduced into the freezer and the core temperature of the fried breaded food product is reduced to less than -15°C within 60 minutes.

In order to minimize unwanted water migration, the fried breaded product should be frozen as quickly as possible. Consequently, in a very preferred embodiment, the fried breaded product is frozen by means of cryogenic freezing. Cryogenic freezing of the fried breaded product preferably comprises the use of liquid nitrogen.

Preferably, the fried product is contacted with liquid and/or gaseous nitrogen until the core temperature of the product is less than -15 °C, more preferably less than -20°C and most preferably less than -22°C.

The package employed in the present process preferably is a package as described herein before.

In one advantageous embodiment of the process, air is removed from the package containing the frozen breaded food product and the silica gel desiccant by vacuum packing before the sealing of the package. Preferably, only a part of the air is removed, e.g. 20-80 vol.% of the air is removed before sealing. More preferably 30-70 vol.%, most preferably 40-65 vol.% of the air in the package is removed before sealing.

In another advantageous embodiment of the process, inert gas is introduced into the package to replace air before the sealing of the package. Examples of inert gases that may be employed are nitrogen, carbon dioxide, argon and mixtures thereof. Most preferably, the nitrogen in introduced into the package before sealing of the package.

The silica gel desiccant is preferably applied in the process in an amount of 2-18% by weight of the one or more frozen breaded food products, more preferably in an amount of 3-16% by weight of the one or more frozen breaded food products, even more preferably in an amount of 3.5-14% by weight of the one or more frozen breaded food products and most preferably in an amount of 4-12% by weight of the one or more frozen breaded food products.

Expressed differently, the silica gel desiccant is preferably applied in an amount of 2-60, more preferably in an amount of 4-40%, even more preferably in an amount of 5-30% and most preferably in an amount of 6-25% by weight of the total amount of water that is contained in the one or more frozen breaded food products.

Yet another aspect of the invention relates to a method of preparing a ready-to-eat breaded food product, said method comprising:
- opening the sealed package of a packaged frozen product described herein before;
- removing the one or more of the breaded food products from the package; and
- heating at least one of said breaded food products in a microwave or an oven to a core temperature of at least 40°C, preferably of at least 50°C and most preferably of 60-105°C.

The invention is further illustrated by the following non-limiting examples.

### EXAMPLES

### Example 1

Frozen breaded food products were prepared using the procedure described below.

### Dough preparation

A dough was prepared on the basis of the recipe that is shown in Table 1.

**Table 1**

| | **Wt.%** |
|---|---|
| Wheat flour | 45.04 |
| Fat powder¹ | 22.52 |
| Water | 27.02 |
| Salt | 0.90 |
| Wheat protein | 4.50 |
| Dough relaxer | <0.1 |

| | |
|---|---|
| ¹ Palm stearin | |

The dough was prepared by sieving all dry ingredients before introducing them into a spiral mixer. Water of 30 degrees Celsius was added and the composition was mixed for about 5 minutes until a well-developed dough was obtained.

### Preparation of filling composition

A chicken-based filling was prepared on the basis of the recipe that is shown in Table 2.

**Table 2**

| | **Wt.%** |
|---|---|
| Chicken breast | 67.19 |
| Chicken skin | 22.28 |
| Corn starch | 4.84 |
| Wheat fiber | 2.44 |
| Salt | 1.94 |
| Flavouring | 1.16 |
| Ascorbic acid | 0.15 |

Using a bowl chopper, first the semi-frozen chicken skin was processed. Next, the chicken breast and the dry ingredients were added and processed until a fine paste was obtained. After preparation, the chicken-based filling was stored overnight at 4°C.

### Enveloping portions of filling composition with dough

The filling and dough described above were co-extruded (weight ratio filling to dough was approx. 50:50) using a Rheon co-extruder equipped with a shape-forming shutter which completely seals the outer dough layer around the inner filling. The portions so obtained were pressed into round disks using a small press.

### Breading

The dough-enveloped fillings were pre-coated with an adhesion composition. The recipe of the adhesion composition is shown in Table 1.

**Table 1**

| | **Wt.%** |
|---|---|
| Egg albumin powder | 0.15 |
| Modified starch | 0.35 |
| Methyl cellulose | 0.25 |
| Xanthan gum | 0.25 |
| Sunflower oil | 5.00 |
| Water | 94.0 |

The adhesion composition was prepared by first mixing the dry ingredients, followed by the addition of the oil and subsequently the water. Mixing was continued until the dry ingredients were fully hydrated (-10-20 minutes)

The dough enveloped fillings were fully immersed in the adhesion composition for a few seconds. Next, the pre-coated products were removed and drained until a thin coating layer remained.

Crumb (particle size 0.8-1.5 mm) that had been prepared using the process described in WO 2010/001101, was applied onto the pre-coated products by placing these products on a thick layer of the coarse crumb and covering the top with the same coarse crumb, and applying light pressure. Subsequently, the products were turned around and again placed on the crumb layer with the non-breaded side pointing downwards. Again, the top was covered with crumb, followed by the application of light pressure and removal of the fully breaded products.

### Frying and freezing

The breaded products were fried in oil of 180°C for 2 minutes and 30 seconds and were placed in the nitrogen freezer 45 seconds after frying.

The nitrogen freezer was set at -90°C and freezing time in the freezer was 12 minutes. Core temperature of the frozen products upon removal from the freezer was -25°C.

### Packing and storage:

After freezing, 3 frozen products having a combined weight of about 85 grams were immediately packed in bags together with 0, 5 or 10 grams of silica gel desiccant. The bags were sealed using a vacuum machine, but only about 50 vol.% of the atmosphere was removed before sealing.

The bags used for packaging the frozen products were polyamide 20 µm-polyethylene 70 µm extrusion laminated bags having a WVTR of not more than 3.0 g/m².day at 23°C and 85% RH, according to DIN 53122 and an oxygen permeability of not more than 50 cm³/m².day.bar at 23°C and 0% RH, according to DIN 53380.

The silica gel desiccant used (Desi Dry - Tyvek^{®} ex CANADACO B.V., the Netherlands) was contained in small bags of Tyvek^{®}, each holding 5 grams of desiccant. The silica gel desiccant had the following specification:
- Silicon dioxide > 97%
- pH-value > 4
- Adsorption capacity for water vapour at 25°C:
   ∘ RH 20%: 8%
   ∘ RH 50%: 20%
   ∘ RH 90%: 30%

The sealed bags holding the frozen products and the silica gel desiccant were stored in a freezer at -24°C

### Microwave heating

After 20 weeks of frozen storage, the frozen breaded food products were prepared for consumption in a microwave by introducing the products in a frozen state (-24°C) and heating at 900W. The core temperature of the products after microwave heating exceeded 75 °C.

The ready-to-eat products were evaluated by a trained panel. It was found that after 20 weeks of shelf-life, the crispiness of the coating was still very good.

### Example 2

Example 1 was repeated except that this time a cheese filling was used that had been prepared on the basis of the recipe that is shown in Table 2.

**Table 2**

| | **Wt.%** |
|---|---|
| Cheese | 78.49 |
| Water | 10.00 |
| Butter | 4.00 |
| Starch | 3.00 |
| Milk protein | 0.80 |
| Emulsifying salts | 0.40 |
| Salt | 3.10 |
| Flavouring | 0.20 |
| Colouring | 0.01 |

After 20 weeks of frozen storage, the frozen breaded food products were prepared for consumption in a microwave by introducing the products in a frozen state (-24°C) and heating at 900W. The core temperature of the products after microwave heating exceeded 75 °C.

After microwave heating, the ready-to-eat products were evaluated by a trained panel. After 20 weeks of frozen storage, the crispiness of the coating was still found to be very good.

### Example 3

Example 1 was repeated except that this time a tomato sauce filling was used that had been prepared on the basis of the recipe that is shown in Table 3.

**Table 3**

| | **Wt.%** |
|---|---|
| Tomato powder | 13.94 |
| Potato starch | 5.31 |
| Sugar | 1.33 |
| Salt | 1.33 |
| Hydrocolloids | 0.40 |
| Sunflower oil | 0.12 |
| Chilies | 0.08 |
| Water | 77.50 |

The tomato sauce was prepared by first mixing the dry ingredients, followed by the addition of water. Mixing was continued until the dry ingredients were fully hydrated (~8 minutes)

After 20 weeks of frozen storage, the frozen breaded food products were prepared for consumption in a microwave by introducing the products in a frozen state (-24°C) and heating at 900W. The core temperature of the products after microwave heating exceeded 75 °C.

After microwave heating, the ready-to-eat products were evaluated by a trained panel. After 20 weeks of frozen storage, the crispiness of the coating was still found to be very good.

### Example 4

Dough and chicken-based filling were prepared as described in Example 1. Furthermore, a batter was prepared on the basis of the recipe that is shown in Table 6.

**Table 6**

| | **Wt.%** |
|---|---|
| Egg albumin powder | 0.15 |
| Modified starch | 0.35 |
| Methyl cellulose | 0.25 |
| Xanthan gum | 0.25 |
| Sunflower oil | 5.00 |
| Water | 94.0 |

The batter was prepared as follows:
- Mix the powder ingredients with oil;
- Add cold water and stir with a whisk;
- Store at 4°C until use.

Frozen breaded snacks were prepared using dough or batter to surround the filling.

The frozen dough-containing snacks were prepared by enveloping portions of the chicken-based filling with dough (weight ratio filling to dough ratio appr. 10:9), followed by the successive application of an adhesion composition and a crumb, frying, freezing and packaging as described in Example 1 (using 11 gram portions of filling). Three frozen products having a combined weight of approximately 68 grams were packaged in a bag that further contained 10 grams of silica gel (Product 1). For comparison also three frozen products were packaged in a bag without added silica gel (Product A)

Frozen snacks were also prepared by coating portions of the chicken-based filling with batter, followed by application of crumb, frying, freezing and packaging.

Product B was prepared by putting chicken-based in a bowl and placing the bowl on a scale. 20 grams of filling was taken from the bowl using an ice spoon and placed on a plastic foil.

Another plastic foil was placed over the portion of filling and a chicken nugget was formed by stamping in a nugget press. Next, the foil with the nugget was placed on a tray and placed in a freezer. After 1 hour in the freezer, the nuggets were frozen and removed from the freezer and left to rest for 15 minutes. The nuggets were taken out of the foil and submerged in the batter. The batter was allowed to drip off before the nuggets were coated liberally with the same crumb as Product 1. The crumb coated nuggets were fried and frozen in the same way as Product 1. Three frozen products having a combined weight of approximately 72 grams were packaged in a bag that further contained 10 grams of silica gel (Product B). For comparison also 3 frozen products were packaged in a bag without added silica gel (Product C).

The sealed bags holding the frozen products were stored in a freezer at -24°C

At regular intervals, the frozen breaded food products were prepared for consumption in a microwave by introducing the products in a frozen state (-24°C) and heating at 900W. The core temperature of the products after microwave heating exceeded 75 °C.

The ready-to-eat products were evaluated by a trained panel. The sensory scores (scale of 0-5) of the products are shown in Table 7.

**Table 7**

| | **Sensory score (0-5)** | | | |
|---|---|---|---|---|
| | **Product 1** | **Product A** | **Product B** | **Product C** |
| After 4 weeks | 3 | 2.75 | 2.5 | 2.5 |
| After 8 weeks | 3 | 2.25 | 1.5 | 1 |
| After 12 weeks | 3 | 2.5 | 1.25 | - |
| After 16 weeks | 2.5 | 1.5 | 1 | - |
| After 20 weeks | 3 | 1 | - | - |
| After 24 weeks | 2.25 | - | - | - |
| After 28 weeks | 2.25 | - | - | - |
| After 32 weeks | 1.75 | - | - | - |

The panel attributed sensory scores on the basis of the following rating:
- 5: = like fresh fried product
- 4: = very good crispiness
- 3: = good crispiness
- 2: = good crispiness, less sound produced
- 1.5: = just acceptable crispiness
- <1.5: = insufficient crispiness

### Example 5

Example 1 was repeated except that this time a ragout filling was used that had been prepared on the basis of the recipe that is shown in Table 8.

**Table 8**

| | **Wt.%** |
|---|---|
| Fat | 6.50 |
| Wheat flour | 7.83 |
| Water | 60.96 |
| Beef | 16.00 |
| Spices and herbs | 2.67 |
| Salt | 0.52 |
| Gelatin | 2.14 |
| Thickeners | 3.37 |

After freezing, 3 frozen products having a combined weight of about 85 grams were immediately packed in bags either without or together with 10 grams of silica gel desiccant.

The sealed bags holding the frozen products were stored in a freezer at -24°C

At regular intervals, the frozen breaded food products were prepared for consumption in a microwave by introducing the products in a frozen state (-24°C) and heating at 900W. The core temperature of the products after microwave heating exceeded 75 °C.

The ready-to-eat products were evaluated by a trained panel. The crispiness of the products was scored on a scale of 0 to 5. The average scores are shown in Table 9.

**Table 9**

| | **Cripsiness (0-5)** | |
|---|---|---|
| | **With silica gel** | **Without silica gel** |
| After 4 weeks | 3.5 | 3 |
| After 8 weeks | 3.5 | 2 |
| After 13 weeks | 3 | 2+ |
| After 16 weeks | 2 | 1 + |
| After 21 weeks | 2+ | |
| After 25 weeks | 2 | |
| After 28 weeks | 1.5 | |
| After 32 weeks | 1.5 | |

### Example 6

Frozen croquettes were prepared using a process in which 29 grams of the ragout filling of Example 5 was either coated with a batter as disclosed in Example 1 of EP-A 1 036 507) or with a dough layer and an adhesion composition in accordance with the present invention, before crumb coating, frying (150 seconds in oil of 180°C), freezing and packaging in a sealed bag together with silica gel.

It was found that the croquettes that had been coated with the aforementioned batter released most of the coating during frying. Consequently, the recipe of the batter was modified slightly in order to increase the adhesion capacity of the batter. The recipes of the two batters that were tested are shown in Table 10.

**Table 10**

| | **Parts by weight** | |
|---|---|---|
| | **Batter 1** | **Batter 2** |
| Tap water | 55 | 55 |
| Fat/oil mixture (palm fat/sunflower oil 1:1) | 3 | 3 |
| Salad oil | 20 | 20 |
| Perfectamyl potato dextrin B1102 | 10 | 10 |
| Hylon VII (high-amylose starch-70% amylose) | 15 | 15 |
| Xanthan | | 0.2 |

After 2 days of frozen storage, the frozen croquettes that had been prepared with batter 2 and the frozen croquettes according to the present invention were heated in the microwave for 40 seconds, yielding hot croquettes having a core temperature of approximately 80°C.

The hot croquettes were evaluated by a trained panel. The crispiness of the products was scored on a scale of 0 to 5. The croquettes according to the invention received an average score of 3.5, whereas the croquettes prepared with batter 2 received an average score of only 1.5. Furthermore, unlike the microwave heated croquettes of the invention, the microwave heated croquettes made with batter 2 showed clearly visible cracks.

## Claims

1. A packaged frozen food product comprising a sealed package made of material that is impermeable to water vapour, said sealed package holding:
• 40-1,000 grams of one or more frozen breaded food products comprising 30-90 wt.% of a filling having a water content of at least 30 wt.% and an outer crumb coating, said one or more frozen breaded food products having a total water content of 25-75 wt.%; and
• silica gel desiccant in an amount of 1-20% by weight of the one or more frozen breaded food products;
wherein the packaged frozen food product is obtained by a process comprising:
a. providing a water-containing filling composition;
b. providing a plastically deformable farinaceous dough;
c. enveloping a portion of the filling composition with a layer of the farinaceous dough to produce an enveloped filling;
d. pre-coating the surface of the enveloped filling with an adhesion composition to produce a pre-coated product; and
e. applying a crumb onto the surface of the pre-coated product to produce a breaded product, said breaded food product having a total water content of 25-75 wt.%;
f. frying the breaded food product to produce a fried breaded food product;
g. introducing the fried breaded food product into a freezer to produce a frozen breaded food product;
h. introducing one or more of the frozen breaded food products and silica gel desiccant into a package or introducing one or more of the frozen breaded food products into a package that already contains silica gel desiccant, said package being made of material that is impermeable to water vapour; and
i. sealing the package; and
wherein the atmosphere within the sealed package is in direct contact with the one or more frozen breaded food products and the silica gel desiccant; and
wherein the walls of the sealed package have a water vapour transmission rate of not more than 10 g/m².day at 23°C and 85% R.H., according to DIN 53122.

2. Packaged frozen product according to claim 1, wherein the silica gel desiccant is present in an amount of 2-60% by weight of the total amount of water that is contained in the one or more frozen breaded food products.

3. Packaged frozen food product according to claim 1 or 2, wherein the atmosphere within the sealed package constitutes 10-70 vol.% of the total volume within the sealed package.

4. Packaged frozen product according to any one of the preceding claims, wherein the silica gel desiccant has an adsorption capacity for water vapour at 25°C and a relative humidity of 90% of 25-45 wt.%.

5. Packaged frozen product according to any one of the preceding claims, wherein the silica gel desiccant contains at least 96 wt.% SiO₂ and has a specific surface area (BET) of 250-1000 m²/g, based on ISO 9277.

6. Packaged frozen product according to any one of the preceding claims, wherein the silica gel desiccant is a granulate and wherein at least 80 wt.% of the granules of said granulate have a diameter in the range of 0.5 and 5.0 mm.

7. Packaged frozen product according to any one of the preceding claims, wherein the package is a bag made of a laminate comprising a polyethylene layer.

8. Packaged frozen product according to claim 7, wherein the laminate additionally comprise a polyamide layer.

9. Packaged frozen product according to any one of the preceding claims, wherein the filling of the one or more frozen breaded food products has a water content of more than 60 wt.%.

10. Packaged frozen product according to any one of the preceding claims, wherein the sealed package comprises a modified atmosphere containing at least 90 vol.% of an inert gas selected from nitrogen, carbon dioxide, argon and mixtures thereof.

11. A process of producing a packaged frozen food product, said process comprising:
• providing a water-containing filling composition;
• providing a plastically deformable farinaceous dough;
• enveloping a portion of the filling composition with a layer of the farinaceous dough to produce an enveloped filling;
• pre-coating the surface of the enveloped filling with an adhesion composition to produce a pre-coated product;
• applying a crumb onto the surface of the pre-coated product to produce a breaded product, said breaded food product having a total water content of 25-75 wt.%;
• frying the breaded food product to produce a fried breaded food product;
• introducing the fried breaded food product into a freezer to produce a frozen breaded food product;
• introducing one or more of the frozen breaded food products and silica gel desiccant into a package or introducing one or more of the frozen breaded food products into a package that already contains silica gel desiccant, said package being made of material that is impermeable to water vapour; and
• sealing the package;
wherein the silica gel desiccant is applied in an amount of 1-20% by weight of the one or more frozen breaded food products.

12. Process according to claim 11, wherein the dough has a water content in the range of 15-40 wt.%.

13. Process according to claim 11 or 12, wherein the dough contains 30-65 wt.% flour.

14. Process according to any one of claims 11-13, wherein the dough contains 10-35 wt.% fat.

15. Process according to any one of claims 11-14, wherein air is removed from the package containing the frozen breaded food product and the silica gel desiccant by vacuum packing before the sealing of the package.

16. A method of preparing a ready-to-eat breaded food product, said method comprising:
• opening the sealed package of a packaged frozen product according to any one of claims 1-10;
• removing the one or more of the breaded food products from the package; and
• heating at least one of said breaded food products in a microwave or an oven to a core temperature of at least 40°C.

## Patentansprüche

1. Verpacktes gefrorenes Lebensmittelprodukt, das eine versiegelte Verpackung aus einem Material umfasst, das wasserdampfundurchlässig ist, wobei die besagte versiegelte Verpackung Folgendes enthält:
• 40-1.000 Gramm eines oder mehrerer gefrorener panierter Lebensmittelprodukte, die 30-90 Gew.-% einer Füllung mit einem Wassergehalt von mindestens 30 Gew.-% und einer äußeren Krumenbeschichtung umfassen, wobei das besagte eine oder die besagten mehreren gefrorenen panierten Lebensmittelprodukte einen Gesamtwassergehalt von 25-75 Gew.-% aufweisen; und
• Kieselgel-Trockenmittel in einer Menge von 1-20 Gew.-% bezogen auf das Gewicht des einen oder der mehreren gefrorenen panierten Lebensm ittelprodukte;
wobei das verpackte gefrorene Lebensmittelprodukt durch ein Verfahren erhalten ist, das Folgendes umfasst:
a. Bereitstellen einer wasserhaltigen Füllzusammensetzung;
b. Bereitstellen eines plastisch verformbaren mehlhaltigen Teigs;
c. Umhüllen einer Portion der Füllzusammensetzung mit einer Schicht des mehlhaltigen Teigs, um eine umhüllte Füllung herzustellen;
d. Vorbeschichten der Oberfläche der umhüllten Füllung mit einer Adhäsionszusammensetzung, um ein vorbeschichtetes Produkt herzustellen; und
e. Aufbringen einer Panade auf die Oberfläche des vorbeschichteten Produkts, um ein paniertes Produkt herzustellen, wobei das besagte panierte Lebensmittelprodukt einen Gesamtwassergehalt von 25-75 Gew.-% aufweist;
f. Frittieren des panierten Lebensmittelprodukts, um ein frittiertes paniertes Lebensmittelprodukt herzustellen;
g. Einbringen des frittierten panierten Lebensmittelprodukts in einen Gefrierschrank, um ein gefrorenes paniertes Lebensmittelprodukt herzustellen;
h. Einbringen eines oder mehrerer der gefrorenen panierten Lebensmittelprodukte und Kieselgel-Trockenmittel in eine Verpackung oder Einbringen eines oder mehrerer der gefrorenen panierten Lebensmittelprodukte in eine Verpackung, die schon Kieselgel-Trockenmittel enthält, wobei die besagte Verpackung aus einem Material ist, das wasserdampfundurchlässig ist; und
i. Versiegeln der Verpackung; und
wobei die Atmosphäre innerhalb der versiegelten Verpackung in direktem Kontakt mit dem einen oder den mehreren gefrorenen panierten Lebensmittelprodukten und dem Kieselgel-Trockenmittel steht; und
wobei die Wände der versiegelten Verpackung eine Wasserdampfdurchlässigkeitsrate von nicht mehr als 10 g/m² pro Tag bei 23 °C und 85 % RH gemäß DIN 53122 aufweisen.

2. Verpacktes gefrorenes Produkt nach Anspruch 1, wobei das Kieselgel-Trockenmittel in einer Menge von 2-60 Gew.-% bezogen auf die Gesamtmenge an Wasser vorhanden ist, die in dem einen oder den mehreren gefrorenen panierten Lebensmittelprodukten enthalten ist.

3. Verpacktes gefrorenes Lebensmittelprodukt nach Anspruch 1 oder 2, wobei die Atmosphäre innerhalb der versiegelten Verpackung 10-70 Vol.-% des Gesamtvolumens innerhalb der versiegelten Verpackung ausmacht.

4. Verpacktes gefrorenes Produkt nach einem der vorhergehenden Ansprüche, wobei das Kieselgel-Trockenmittel eine Adsorptionskapazität für Wasserdampf bei 25 °C und einer relativen Luftfeuchtigkeit von 90 % von 25-45 Gew.-% aufweist.

5. Verpacktes gefrorenes Produkt nach einem der vorhergehenden Ansprüche, wobei das Kieselgel-Trockenmittel mindestens 96 Gew.-% SiO₂ enthält und einen spezifischen Oberflächenbereich (BET) von 250-1000 m²/g, basierend auf ISO 9277, aufweist.

6. Verpacktes gefrorenes Produkt nach einem der vorhergehenden Ansprüche, wobei das Kieselgel-Trockenmittel ein Granulat ist und wobei mindestens 80 Gew.-% der Granulatkörner des besagten Granulats einen Durchmesser im Bereich von 0,5 und 5,0 mm aufweisen.

7. Verpacktes gefrorenes Produkt nach einem der vorhergehenden Ansprüche, wobei die Verpackung ein Beutel aus einem Laminat ist, das eine Polyethylenschicht umfasst.

8. Verpacktes gefrorenes Produkt nach Anspruch 7, wobei das Laminat zusätzlich eine Polyamidschicht umfasst.

9. Verpacktes gefrorenes Produkt nach einem der vorhergehenden Ansprüche, wobei die Füllung des einen oder der mehreren gefrorenen panierten Lebensmittelprodukte einen Wassergehalt von mehr als 60 Gew.-% aufweist.

10. Verpacktes gefrorenes Produkt nach einem der vorhergehenden Ansprüche, wobei die versiegelte Verpackung eine modifizierte Atmosphäre umfasst, die mindestens 90 Vol.-% eines Inertgases enthält, das aus Stickstoff, Kohlendioxid, Argon und Mischungen davon ausgewählt ist.

11. Verfahren zum Herstellen eines verpackten gefrorenen Lebensmittelprodukts, wobei das Verfahren Folgendes umfasst:
• Bereitstellen einer wasserhaltigen Füllzusammensetzung;
• Bereitstellen eines plastisch verformbaren mehlhaltigen Teigs;
• Umhüllen einer Portion der Füllzusammensetzung mit einer Schicht des mehlhaltigen Teigs, um eine umhüllte Füllung herzustellen;
• Vorbeschichten der Oberfläche der umhüllten Füllung mit einer Adhäsionszusammensetzung, um ein vorbeschichtetes Produkt herzustellen;
• Aufbringen einer Panade auf die Oberfläche des vorbeschichteten Produkts, um ein paniertes Produkt herzustellen, wobei das besagte panierte Lebensmittelprodukt einen Gesamtwassergehalt von 25-75 Gew.-% aufweist;
• Frittieren des panierten Lebensmittelprodukts, um ein frittiertes paniertes Lebensmittelprodukt herzustellen;
• Einbringen des frittierten panierten Lebensmittelprodukts in einen Gefrierschrank, um ein gefrorenes paniertes Lebensmittelprodukt herzustellen;
• Einbringen eines oder mehrerer der gefrorenen panierten Lebensmittelprodukte und Kieselgel-Trockenmittel in eine Verpackung oder Einbringen eines oder mehrerer der gefrorenen panierten Lebensmittelprodukte in eine Verpackung, die schon Kieselgel-Trockenmittel enthält, wobei die besagte Verpackung aus einem Material ist, das wasserdampfundurchlässig ist; und
• Versiegeln der Verpackung;
wobei das Kieselgel-Trockenmittel in einer Menge von 1-20 Gew.-% des einen oder der mehreren gefrorenen panierten Lebensmittelprodukte angewendet wird.

12. Verfahren nach Anspruch 11, wobei der Teig einen Wassergehalt im Bereich von 15-40 Gew.-% aufweist.

13. Verfahren nach Anspruch 11 oder 12, wobei der Teig 30-65 Gew.-% Mehl enthält.

14. Verfahren nach einem der Ansprüche 11-13, wobei der Teig 10-35 Gew.-% Fett enthält.

15. Verfahren nach einem der Ansprüche 11-14, wobei Luft aus der Verpackung, die das gefrorene panierte Lebensmittelprodukt und das Kieselgel-Trockenmittel enthält, durch Vakuumverpacken vor dem Versiegeln der Verpackung entfernt wird.

16. Verfahren zum Herstellen eines verzehrfertigen panierten Lebensmittelprodukts, wobei das besagte Verfahren Folgendes umfasst:
• Öffnen der versiegelten Verpackung eines verpackten gefrorenen Produkts nach einem der Ansprüche 1-10;
• Entfernen des einen oder der mehreren der panierten Lebensmittelprodukte aus der Verpackung; und
• Erhitzen von mindestens einem der besagten panierten Lebensmittelprodukte in einer Mikrowelle oder einem Ofen auf eine Kerntemperatur von mindestens 40 °C.

## Revendications

1. Produit alimentaire surgelé emballé comprenant un emballage scellé fait d'un matériau qui est imperméable à la vapeur d'eau, ledit emballage scellé contenant
• 40 à 1000 grammes d'un ou plusieurs produits alimentaires panés surgelés comprenant 30 à 90 % en poids d'un remplissage ayant une teneur en eau d'au moins 30 % en poids et un enduit extérieur de chapelure, ledit un ou plusieurs produits alimentaires panés surgelés ayant une teneur en eau totale de 25 à 75 % en poids ; et
• un déshydratant de gel de silice dans une quantité de 1 à 20 % en poids de l'un ou plusieurs produits alimentaires panés surgelés ;
où le produit alimentaire surgelé emballé est obtenu par un procédé comprenant :
a. fournir une composition de remplissage contenant de l'eau ;
b. fournir une pâte farineuse plastiquement déformable ;
c. envelopper une portion de la composition de remplissage avec une couche de la pâte farineuse pour produire un remplissage enveloppé ;
d. pré-enduire la surface du remplissage enveloppée avec une composition d'adhésion pour produire un produit pré-enduit ; et
e. appliquer une chapelure sur la surface du produit pré-enduit pour produire un produit pané, ledit produit alimentaire pané ayant une teneur en eau totale de 25 à 75 % en poids ;
f. frire le produit alimentaire pané pour produire un produit alimentaire pané frit ;
g. introduire le produit alimentaire pané frit dans un congélateur pour produire un produit alimentaire pané surgelé ;
h. introduire un ou plusieurs des produits alimentaires panés surgelés et un déshydratant de gel de silice dans un emballage ou introduire un ou plusieurs des produits alimentaires panés surgelés dans un emballage qui contient déjà un déshydratant de gel de silice, ledit emballage étant fait d'un matériau qui est imperméable à la vapeur d'eau ; et
i. sceller l'emballage ; et
où l'atmosphère à l'intérieur de l'emballage scellé est en contact direct avec l'un ou plusieurs produits alimentaires panés surgelés et le déshydratant de gel de silice ; et
où les parois de l'emballage scellé ont un taux de transmission de vapeur d'eau ne dépassant pas 10 g/m².jour à 23°C et 85 % R.H., selon DIN 53122.

2. Produit surgelé emballé selon la revendication 1, où le déshydratant de gel de silice est présent dans une quantité de 2 à 60 % en poids de la quantité totale d'eau qui est contenue dans l'un ou plusieurs produits alimentaires panés surgelés.

3. Produit alimentaire surgelé emballé selon la revendication 1 ou 2, où l'atmosphère à l'intérieur de l'emballage scellé constitue 10 à 70 % du volume total à l'intérieur de l'emballage scellé.

4. Produit surgelé emballé selon l'une quelconque des revendications précédentes, où le déshydratant de gel de silice a une capacité d'adsorption de la vapeur d'eau à 25°C et une humidité relative de 90 % de 25 à 45 % en poids.

5. Produit surgelé emballé selon l'une quelconque des revendications précédentes, où le déshydratant de gel de silice contient au moins 96 % en poids de SiO₂ et a une zone de surface spécifique (BET) de 250 à 1000 m²/g, sur la base ISO 9277.

6. Produit surgelé emballé selon l'une quelconque des revendications précédentes, où le déshydratant de gel de silice est un granulé et où au moins 80 % en poids des granules dudit granulé ont un diamètre dans la gamme de 0,5 et 5,0 mm.

7. Produit surgelé emballé selon l'une quelconque des revendications précédentes, où l'emballage est un sac fait d'un stratifié comprenant une couche de polyéthylène.

8. Produit surgelé emballé selon la revendication 7, où le stratifié comprend en outre une couche de polyamide.

9. Produit surgelé emballé selon l'une quelconque des revendications précédentes, où le remplissage de l'un ou plusieurs produits alimentaires panés surgelés a une teneur en eau de plus de 60 % en poids.

10. Produit surgelé emballé selon l'une quelconque des revendications précédentes, où l'emballage scellé comprend une atmosphère modifiée contenant au moins 90 % en volume d'un gaz inerte choisi parmi l'azote, le dioxyde de carbone, l'argon et des mélanges de ceux-ci.

11. Procédé de production d'un produit alimentaire surgelé emballé, ledit procédé comprenant :
• fournir une composition de remplissage contenant de l'eau ;
• fournir une pâte farineuse plastiquement déformable ;
• envelopper une portion de la composition de remplissage avec une couche de la pâte farineuse pour produire un remplissage enveloppé ;
• pré-enduire la surface du remplissage enveloppé avec une composition d'adhésion pour produire un produit pré-enduit ;
• appliquer une chapelure sur la surface du produit pré-enduit pour produire un produit pané, ledit produit alimentaire pané ayant une teneur en eau totale de 25 à 75 % en poids ;
• frire le produit alimentaire pané pour produire un produit alimentaire pané frit ;
• introduire le produit alimentaire pané frit dans un congélateur pour produire un produit alimentaire pané surgelé ;
• introduire un ou plusieurs des produits alimentaires panés surgelés et un déshydratant de gel de silice à l'intérieur d'un emballage ou introduire un ou plusieurs des produits alimentaires panés surgelés à l'intérieur d'un emballage qui contient déjà un déshydratant de gel de silice, ledit emballage étant fait d'un matériau qui est imperméable à la vapeur d'eau ; et
• sceller l'emballage ;
où le déshydratant de gel de silice est appliqué dans une quantité de 1 à 20 % en poids de l'un ou plusieurs produits alimentaires panés surgelés.

12. Procédé selon la revendication 11, où la pâte a une teneur en eau dans la gamme de 15 à 40 % en poids.

13. Procédé selon la revendication 11 ou 12, où la pâte contient 30 à 65 % en poids de farine.

14. Procédé selon l'une quelconque des revendications 11 à 13, où la pâte contient 10 à 35 % en poids de matières grasses.

15. Procédé selon l'une quelconque des revendications 11 à 14, où l'air est éliminé de l'emballage contenant le produit alimentaire pané surgelé et le déshydratant de gel de silice par emballage sous vide avant le scellement de l'emballage.

16. Procédé pour préparer un produit alimentaire pané prêt à consommer, ledit procédé comprenant :
• ouvrir l'emballage scellé d'un produit surgelé emballé selon l'une quelconque des revendications 1 à 10 ;
• retirer l'un ou plusieurs des produits alimentaires panés de l'emballage ; et
• chauffer au moins l'un desdits produits alimentaires panés dans un micro-ondes ou un four à une température centrale d'au moins 40°C.
